Europäisches Patentamt

European Patent Office

Office européen des brevets

(11) Publication number: **0 065 847**

**A1**

## (12) EUROPEAN PATENT APPLICATION

(21) Application number: **82302410.4**

(22) Date of filing: **12.05.82**

(51) Int. Cl.³: **G 05 D 9/12**
**G 05 D 9/04, H 01 H 35/18**
**F 16 K 31/34**

(30) Priority: **15.05.81 GB 8114995**

(43) Date of publication of application:
**01.12.82 Bulletin 82/48**

(84) Designated Contracting States:
**AT BE CH DE FR IT LI LU NL SE**

(71) Applicant: **Robinson, Donald**
**19 St. Paul's Avenue**
**Lytham St. Annes Lancashire, FY8 1ED(GB)**

(72) Inventor: **Robinson, Donald**
**19 St. Paul's Avenue**
**Lytham St. Annes Lancashire, FY8 1ED(GB)**

(74) Representative: **Quest, Barry et al,**
**M'CAW & CO. 41-51 Royal Exchange Cross Street**
**Manchester M2 7BD(GB)**

(54) **Liquid level control.**

(57) Apparatus for controlling the level (12) of liquid (11) in a container (10) such as a carbonated liquid dispenser comprises a float operated valve (14, 15) in an upper part (16) of the container (10), which when opened due to a fall in the level (12) of liquid (11) in the container (10) as liquid (11) is drawn therefrom, allows gas under pressure (Y) to escape from the upper part (16) of the container (10) into a cylinder (17). In the cylinder (17) is a pressure operated switch (19, 20) or valve which controls the supply (21) of liquid to the container to replace that drawn off, and a bleed valve (22) which allows leakage of gas from the cylinder (17) to atmosphere so that the gas pressure in the cylinder (17) falls when the drawn off liquid is replaced and the float operated valve (14, 15) closes. The pressure operated switch (19, 20) or valve then stops the supply (23) of liquid to the container (10) to maintain the level (12) of liquid (11) in the container (10).

Fig.1

EP 0 065 847 A1

0065847

(EP13984M)         - 1 -
(10.5.82)

## LIQUID LEVEL CONTROL

This invention relates to apparatus for use in controlling the level of liquid in a container of such liquid.  The invention has particular application to apparatus in which quantities of the liquid are withdrawn from the liquid reservoir in the container at periodic intervals, which container is maintained at an elevated pressure.

Devices of the above type are known in which a float in the container is connected via a mechanical linkage to a switch which controls the supply of liquid to the container.  Alternatively the float may operate a proximity switch which controls the liquid supply or low voltage electrodes are provided in the container and the conductivity through the gas or liquid medium between such electrodes is sensed and used to control the liquid supply switch.  Such devices tend to be unreliable and/or expensive, and it is an object of the present invention to provide means for controlling the level of liquid in a container which is simple in operation, reliable and inexpensive to install and maintain.

The invention provides means for controlling the level of liquid in a container comprising a float operated

(EP13984M)
(10.5.82)                          - 2 -

valve in said container, a cylinder in fluid flow
connection with said container upon opening of said
valve, pressure operable control means responsive to
the fluid pressure in said cylinder and adapted to
supply liquid to said container and bleed valve means
adapted to control leakage of fluid from said cylinder.

The control means may comprise an electrical switch
which is connected to means for supplying liquid to
said container.  Such supplying means may comprise a
solenoid operated valve which on actuation allows
liquid under pressure to flow to said container.
Alternatively such supplying means may be an electrical
pump operable to supply liquid to said container.

Alternatively the control means may comprise a pressure
operable valve which on actuation allows liquid under
pressure to flow to said container.

Preferably said float operated valve is located in an
upper part of said container above the level of liquid
therein.  Said upper part may contain a gas under
pressure, which gas preferably is air.  Means may be
provided for supplying gas under pressure to said
upper part.

The bleed valve means may comprise an aperture in a
wall of said cylinder, or alternatively a portion of
such wall which is porous to the fluid in said cylinder.

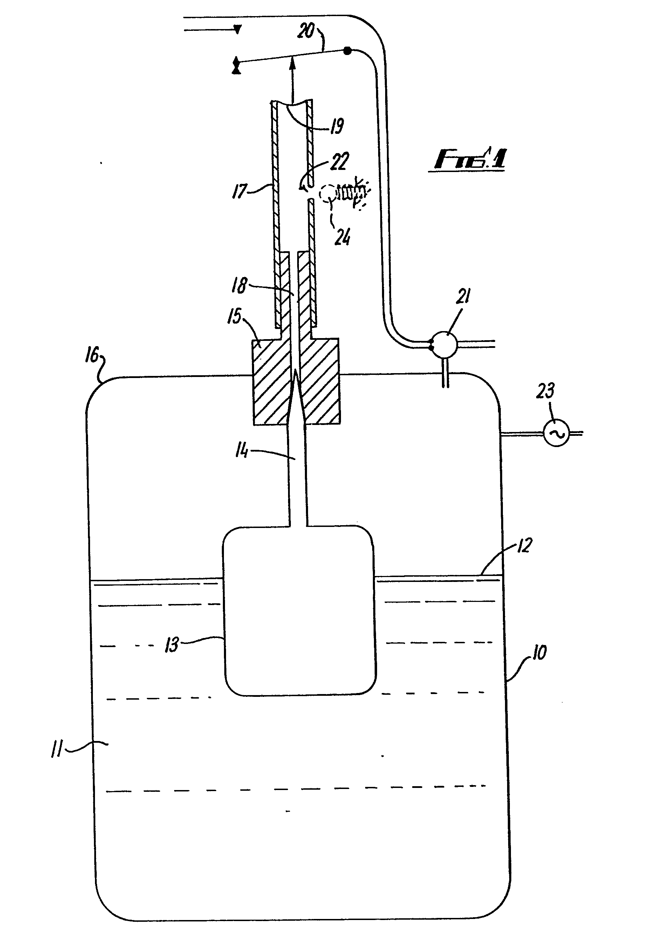

The invention will now be described with reference to
the accompanying drawings in which Figs. 1 to 4 show
one embodiment in sequence of operation.

Referring now to Fig. 1 there is shown a container 10

0065847

(EP13984A)
(10.5.82)                              - 3 -

in which a reservoir of liquid 11 is contained, the liquid 11 having a level 12 under normal non-operating conditions. A float 13 has a needle 14 connected therewith, which needle 14 forms part of a valve 15 mounted in the upper part 16 of the container 10 above the liquid level 12. In the non-operating conditions shown in Fig. 1 the valve 15 is closed and air under pressure Y is contained in the upper part 16 of the container. A cylinder 17 is mounted on the container 10 so as to be in fluid flow connection via inlet 18 with the upper part 16 of the container 10 when valve 15 is open. A diaphragm 19 is provided at the end of cylinder 17 and is coupled to a switch 20. The switch 20 is electrically connected to a pump or solenoid operated valve 21 by means of which liquid may be supplied to the container 10. In the non-operating conditions shown in Fig. 1 the switch 20 is open so that no liquid is being supplied to container 10.

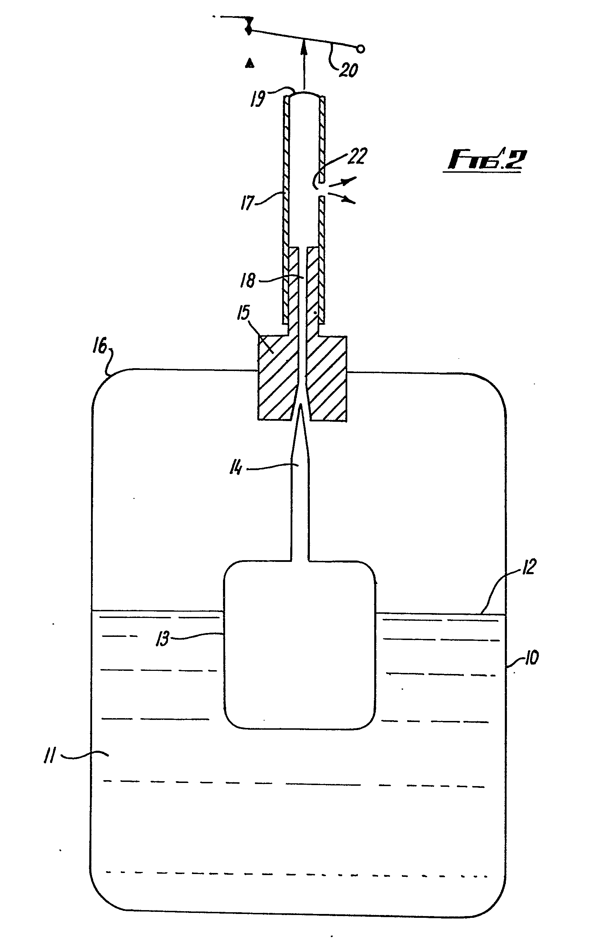

If liquid is now drawn from container 10 through an outlet (not shown) the liquid level 12 will fall and float 13 will fall also, thus opening valve 15. Air will therefore pass along inlet 18 into cylinder 17. This situation is shown in Fig. 2. At this stage the pressure Y of the air in upper part 16 of container 10 will fall and the air pressure X in cylinder 17 will rise, thus causing diaphragm 19 to move and actuate switch 20. Closing of switch 20 causes actuation of pump or valve 21 to supply liquid to container 10 to replace that drawn therefrom. At this stage there will be a small leakage of air from cylinder 17 through the bleed valve 22, the leakage rate being dependent upon the size of the aperture or the porosity of a plug or membrane across such aperture. A suitable material from which such a plug may be made is 'PORVAIR'.

(EP13984A)
(10.5.82)                    - 4 -

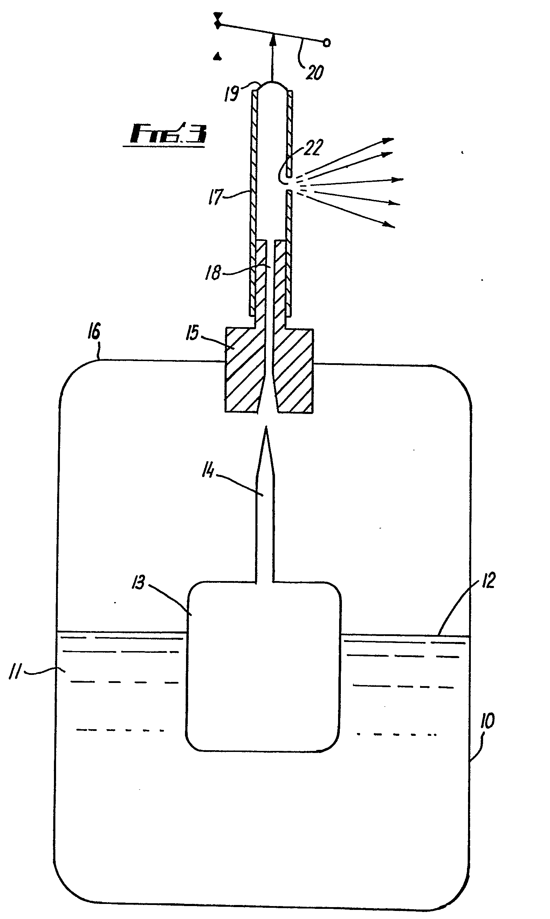

Eventually the situation shown in Fig. 3 will be
reached in which the liquid level 12 has fallen to
its lowermost level as the draw off of the liquid from
container 10 is terminated and before the effect of
the supply of further liquid raises the level 12. At
this stage the valve 15 is at its most open and the
pressure of air in upper part 16 of container 10 and
cylinder 17 has equalised at Y'. This is the maximum
pressure reached in cylinder 17 and maximum leakage
through bleed valve 22 occurs. Subsequently due to
such leakage the pressure in cylinder 17 will start
to fall.

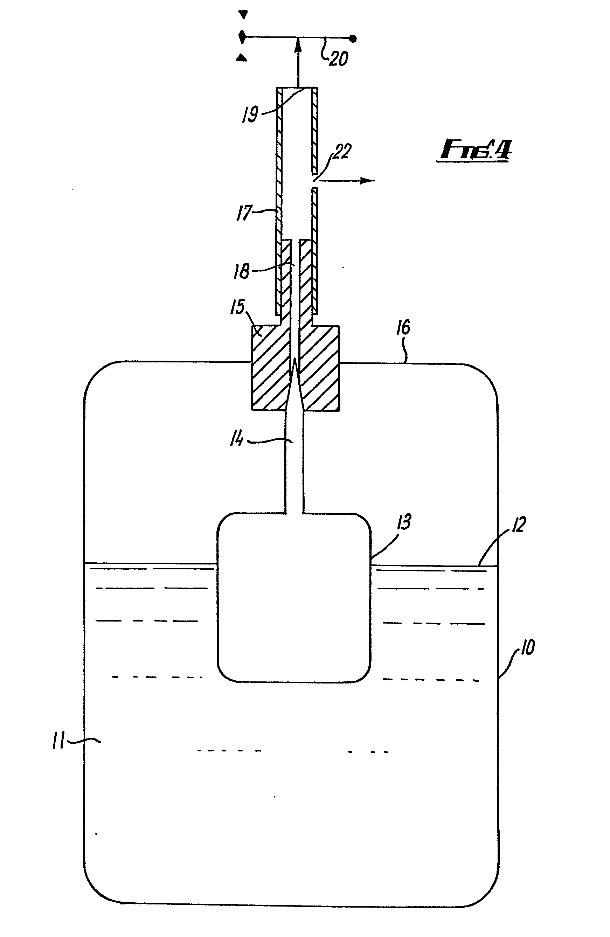

The liquid level 12 will rise due to the influx of
liquid from the supply 21 so that valve 15 will
eventually close as shown in Fig. 4. When this
situation is reached the pressure in cylinder 17 will
reduce due to leakage through bleed valve 22 of air
which now cannot be replaced by air from the upper
part 16 of the container 10. The falling pressure
in cylinder 17 causes the diaphragm 19 to return
towards the position occupied initially, thus opening
switch 20 and cutting off the electrical supply to the
pump or valve 21. As a consequence no further liquid
will be supplied to container 10 so that the liquid
level 12 is then at the position shown in Fig. 1.
The pressure in cylinder 17 will continue to fall
until it reaches ambient pressure as apertains in the
conditions shown in Fig. 1. The pressure of air in
the upper part 16 of container 10 is restored to the
valve Y by means of air supply means 23. The cycle
is repeated each time that liquid is drawn from
container 10 and the liquid level 12 is thus restored
to its original level after each such liquid draw off.

(EP13984A)
(10.5.82) — 5 —

The apparatus described above is particularly suited to the provision of carbonated beverages, the pump 21 supplying water at a pressure above that of the carbon dioxide which is at a pressure required to carbonate the water.

The response or rate of operation of the apparatus may be varied by provision of a lost motion linkage between float 13 and needle 14. Also further variation may be achieved by varying the size of inlet 18 and aperture 22 and/or the porosity of a plug located in such aperture as previously mentioned. Yet further variation may be achieved by the use of an elastic material to form the wall of cylinder 17 so as to store a greater volume of air under pressure therein.

A further advantageous effect resulting from the use of the above described apparatus in connection with the dispensing of carbonated beverages is that air or other gases which are released when water is sprayed into the pressurised container 10 pass through valve 15 and away to atmosphere. In this way upper part 16 of the container 10 is purged of such air and other gases so that reabsorption into the water is prevented or substantially reduced and the maximum carbon dioxide content in the carbonated water is thereby maintained.

As a further modification of the apparatus the bleed valve 22 may include a spring loaded closure member 24 as shown in the open position in dotted lines in Fig. 1. The spring rate of such a device is chosen so that the pressure in cylinder 17 must be above a predetermined value before valve 22 opens. In the situation shown in Fig. 4 therefore, the pressure in cylinder 17 will only fall to that at which valve 22

(EP13984A)
(10.5.82)                    - 6 -

is closed. In consequence, when liquid 11 is drawn from container 10, liquid level 12 falls and valve 15 opens, the pressure in cylinder 17 quickly reaches that required to close switch 20, and liquid is then supplied to container 10. In this way the fall in liquid level 12 and the drop in pressure from Y to Y' is kept to a minimum. Such an arrangement is suitable for critical control of the liquid level 12 and in the event that there is a relatively small pressure differential between that in the container 10 and that required to operate the switch 20.

As an alternative to electrical switch 20 the diaphragm 19 may actuate a valve comprised in a pneumatic or hydraulic control system for valve or pump 21.

0065847

(EP13984)
(10.5.82)                    - 7 -

Claims:

1.   Apparatus for controlling the level (12) of liquid (11) in a container (10) comprising a float operated valve (14,15) in said container (10), characterised by a cylinder (17) in fluid flow connection with said container (10) upon opening of said valve (14,15), pressure operable control means (19,20) responsive to the fluid pressure (X) in said cylinder (17) and adapted to control the supply of liquid to said container (10) and bleed valve means (22) in said cylinder (17) and adapted to control the leakage of fluid therefrom.

2.   Apparatus according to claim 1 characterised in that said control means (19,20) comprises a pressure operable electrical switch (20) which is connected to means (21) for supplying liquid to said container (10).

3.   Apparatus according to claim 2 characterised in that said liquid supplying means (21) comprises a solenoid operated valve.

4.   Apparatus according to claim 2 characterised in that said liquid supplying means (21) comprises an electrical pump.

5.   Apparatus according to claim 1 characterised in that said control means (19) comprises a pressure operable valve in fluid flow connection with a source of liquid.

0065847

6.    Apparatus according to any one of claims 1 to 5
characterised in that
said float operated valve (14,15) is located in an
upper part (16) of said container (10) above the level
(12) of liquid (11) therein.

7.    Apparatus according to claim 6
characterised in that
means (23) are provided for supplying gas under pressure
to said upper part.

8.    Apparatus according to any one of claims 1 to 7
characterised in that
said bleed valve means (22) comprises an aperture in
a wall of said cylinder (17).

9.    Apparatus according to claim 8
characterised in that
said bleed valve means (22,24) comprises resiliently
biassed valve closure means (24).

10.    Apparatus according to any one of claims 1 to 7
characterised in that
said bleed valve means (22) comprises a gas porous
portion of a wall of said cylinder (17).

11.    Apparatus according to any one of claims 1 to 10
characterised in that
said float operated valve (14,15) comprises a needle
valve (14).

12.    Apparatus according to claim 1
characterised in that
said control means (19,20) comprises a pressure
operable pneumatic or hydraulic valve which is adapted

(EP13984A)
(10.5.82)
- 9 -

to control means (21) for supplying liquid to said container (10).

0065847

Fig. 1

FIG. 2

3/4

**FIG.3**

_FIG.4_

European Patent Office

**EUROPEAN SEARCH REPORT**

Application number

EP 82 30 2410

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A- 680 064 (G.DIKKERS & CO.) *Page 1, line 87 to page 2, line 81; figures 1,2* | 1,5,12 | G 05 D 9/12 G 05 D 9/04 H 01 H 35/18 F 16 K 31/34 |
| Y | FR-A-1 353 003 (L.DOYEN et al.) *Page 1, right-hand column, line 20 to page 2, right-hand column, line 28; figure* | 1,5,6 12 | |
| A | US-A-1 787 389 (R.MEIJER) *Page 1, line 38 to page 2, line 40; figures 1,2,3,4* | 1,5,8 12 | |
| A | DE-B-1 140 419 (R.BRAUN) *Column 1, line 1 to column 2, line 52; figure* | 1,5,6 12 | TECHNICAL FIELDS SEARCHED (Int. Cl. 3) |
| A | US-A-3 981 619 (M.MITTER) *Column 3, lines 21 to 36; column 6, lines 7 to 57; figures 4,9,10* | 2-4 | G 05 D 9/00 F 16 K 31/00 H 01 H 35/00 |
| A | US-A-2 632 464 (C.E.KERR) *Column 2, line 1 to column 3, line 41; figure 1* | 5,11, 12 | |

The present search report has been drawn up for all claims

| Place of search | Date of completion of the search | Examiner |
|---|---|---|
| THE HAGUE | 17-08-1982 | POINT A.G.F. |